# EUROPEAN PATENT APPLICATION

(11) **EP 2 056 429 A2**
(43) Date of publication of application: **06.05.2009**
(21) Application number: 08018749.5
(22) Date of filing: 27.10.2008
(51) Int. Cl.: H02K 3/34

(54) **Interphase insulating sheet of rotating electric machine, and electric compressor**

(30) Priority: 29.10.2007 JP 2007280539
(71) Applicant: KABUSHIKI KAISHA TOYOTA JIDOSHOKKI, Kariya-shi, Aichi-ken (JP)
(72) Inventor: Horiba, Tatsuya, Kariya-shi Aichi-ken (JP); Fukasaku, Hiroshi, Kariya-shi Aichi-ken (JP)
(74) Representative: HOFFMANN EITLE

(57) **Abstract**

An interphase insulating sheet of a rotating electric machine is disclosed. The interphase insulating sheet includes a first insulating portion arranged between first coil ends of two different phases, a second insulating portion arranged between second coil ends of two different phases, and bridge pieces inserted in slots. The first insulating portion includes a first coupling aid. The second insulating portion includes a second coupling aid. The first coupling aid and the second coupling aid each includes an outer surface facing radially outward of the stator core and an inner surface facing radially inward of the stator core. The first end portion of the bridge piece is located on the outer surface of the first coupling aid, and the second end portion of the bridge piece is located on the inner surface of the second coupling aid.

## Description

### BACKGROUND OF THE INVENTION

The present invention relates to an interphase insulating sheet of rotating electric machine, and an electric compressor.

Japanese Laid-Open Patent Publication No. 58-119739 discloses an interphase insulating sheet arranged between the ends of the coil of one phase and the ends of the coils of the other phases. The interphase insulating sheet disclosed in the above publication includes a pair of coil end insulating portions, which insulate the coil ends from each other, and coupling pieces (bridge pieces), which are inserted in slots of a stator. The pair of coil end insulating portions and the coupling pieces are formed separately, and both ends of each coupling piece are heat welded to the pair of coil end insulating portions.

The coils, which is wound around the stator by wave winding, are inserted in the slots using an inserter as disclosed in, for example, Japanese Laid-Open Patent Publication No. 2005-80356. In a case where the coupling pieces disclosed in the above publication No. 58-119739 are arranged on the inner surface of the pair of annular coil end insulating portions, when the coils are inserted from the insertion ends of the slots, the coils might get caught on the edges of the coupling pieces located in the vicinity of the insertion ends. In this case, the insulating coating of the coils might be damaged or the edges of the coupling pieces might be torn off. In a case where the coupling pieces disclosed in the above publication No. 58-119739 are arranged on the outer surface of the pair of annular coil end insulating portions, when the coil is inserted in the slots, the coils might get caught on the edges of the coil end insulating portion located in the vicinity of the ends of the slots opposite to the insertion ends. In this case, the insulating coating of the coil might be damaged.

### SUMMARY OF THE INVENTION

Accordingly, it is an objective of the present invention to provide an interphase insulating sheet of a rotating electric machine that prevents coils to be inserted from getting caught by the edges of bridge pieces or the edge of the insulating sheet, and an electric compressor.

To achieve the foregoing objective and in accordance with a first aspect of the present invention, an interphase insulating sheet of a rotating electric machine is provided. The rotating electric machine is provided with a stator including an annular stator core. The stator core includes first and second end faces facing opposite directions in the axial direction of the stator core. The stator core includes a plurality of teeth arranged along an inner circumference of the stator core in the circumferential direction. Slots are formed between adjacent teeth. Each slot has an insertion end that opens at the first end face. Coils of a plurality of phases are inserted in the slots from the insertion ends and toward the second end face, so that the coils are provided on the teeth in wave winding passing through the slots. The coil of each phase includes a first coil end arranged to protrude outside from the first end face and a second coil end arranged to protrude outside from the second end face. The interphase insulating sheet includes a first insulating portion arranged between the first coil ends of two different phases, a second insulating portion arranged between the second coil ends of two different phases, and at least one bridge piece inserted in one of the slots. The bridge piece includes a first end portion coupled to the first insulating portion and a second end portion coupled to the second insulating portion. The first insulating portion includes at least one first coupling aid integrally provided with the first insulating portion to extend from a first opposing end that faces the second insulating portion and into the slot, and the second insulating portion includes at least one second coupling aid integrally provided with the second insulating portion to extend from a second opposing end that faces the first insulating portion and into the slot. The first end portion of the bridge piece is heat welded to the first coupling aid, and the second end portion of the bridge piece is heat welded to the second coupling aid. The first coupling aid and the second coupling aid each have an outer surface facing radially outward of the stator core and an inner surface facing radially inward of the stator core. The first end portion of the bridge piece is located on the outer surface of the first coupling aid, and the second end portion of the bridge piece is located on the inner surface of the second coupling aid.

In accordance with a second aspect of the present invention, an electric compressor is provided, which compresses gas in a compression chamber and discharges the gas by compression operation of a compression operation body based on rotation of a rotary shaft. The rotary shaft is driven by a rotating electric machine provided with the interphase insulating sheet according to the first aspect of the present invention.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1A is a cross-sectional view illustrating an electric compressor according to a first embodiment of the present invention;
Fig. 1B is a perspective view illustrating the interphase insulating sheet provided in the compressor of Fig. 1A;
Fig. 2A is a developed view illustrating the interphase insulating sheet of Fig. 1B;
Fig. 2B is a cross-sectional view taken along line 2B-2B in Fig. 2A;
Fig. 2C is a cross-sectional view taken along line 2C-2C in Fig. 2A;
Fig. 3A is a cross-sectional view illustrating an ultrasonic welding apparatus used to manufacture the interphase insulating sheet of Fig. 1B;
Fig. 3B and Fig. 3C are diagrams for explaining ultrasonic welding performed by the ultrasonic welding apparatus of Fig. 3A;
Fig. 4 is a cross-sectional view taken along line 4-4 in Fig. 1A;
Fig. 5 is a cross-sectional view taken along line 5-5 in Fig. 1A;
Fig. 6 is a cross-sectional view taken along line 6-6 in Fig. 1A;
Fig. 7 is a schematic diagram for explaining the state of a coil as viewed from the rear side of the compressor of Fig. 1A;
Fig. 8 is a schematic diagram for explaining the state of a coil as viewed from the front side of the compressor of Fig. 1A;
Figs. 9A and 9B are perspective views for explaining the method for inserting a coil into the slots provided in the stator;
Fig. 10A is a perspective view illustrating an interphase insulating sheet according to a second embodiment of the present invention;
Fig. 10B is a cross-sectional side view partially illustrating the interphase insulating sheet of Fig. 10A;
Fig. 11A is a developed view illustrating the interphase insulating sheet of Fig. 10B;
Fig. 11B is a cross-sectional view taken along line 11B-11B in Fig. 10A;
Fig. 11C is a cross-sectional view taken along line 11C-11C in Fig. 10A;
Fig. 12A is a perspective view illustrating an interphase insulating sheet according to a third embodiment of the present invention;
Fig. 12B is a cross-sectional side view partially illustrating the interphase insulating sheet of Fig. 12A;
Fig. 13A is a developed view illustrating the interphase insulating sheet of Fig. 12A;
Fig. 13B is a cross-sectional view taken along line 13B-13B in Fig. 12A;
Fig. 13C is a cross-sectional view taken along line 13C-13C in Fig. 12A;
Fig. 14A is a cross-sectional view illustrating an ultrasonic welding apparatus used to manufacture the interphase insulating sheet of Fig. 12A; and
Figs. 14B and 14C are diagrams for explaining ultrasonic welding performed by the ultrasonic welding apparatus of Fig. 14A.

### DETAILED DESCRIPTION OF THE PREFERRED EMBODIMENTS

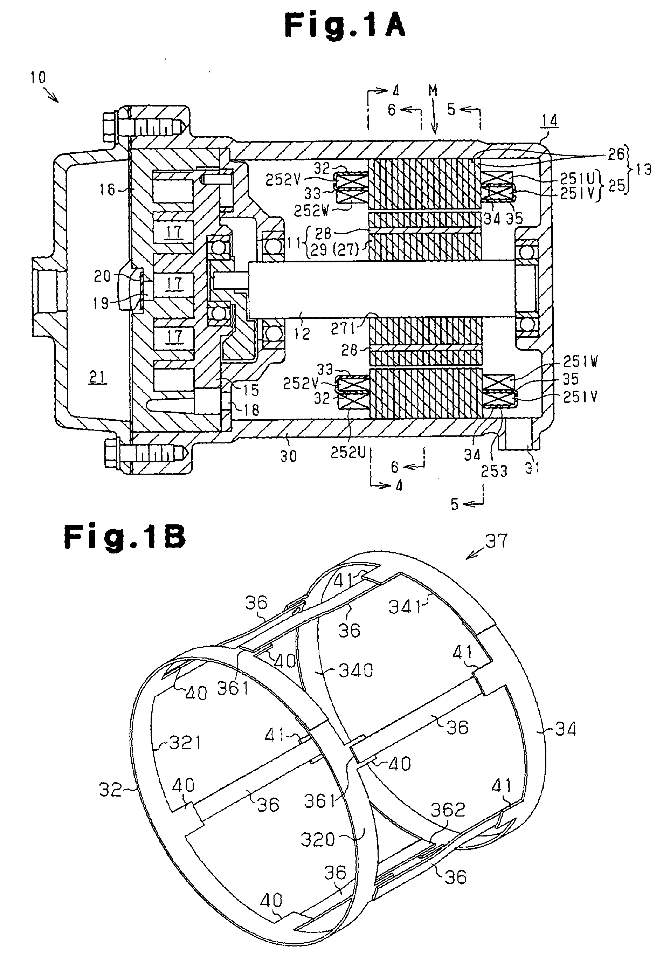

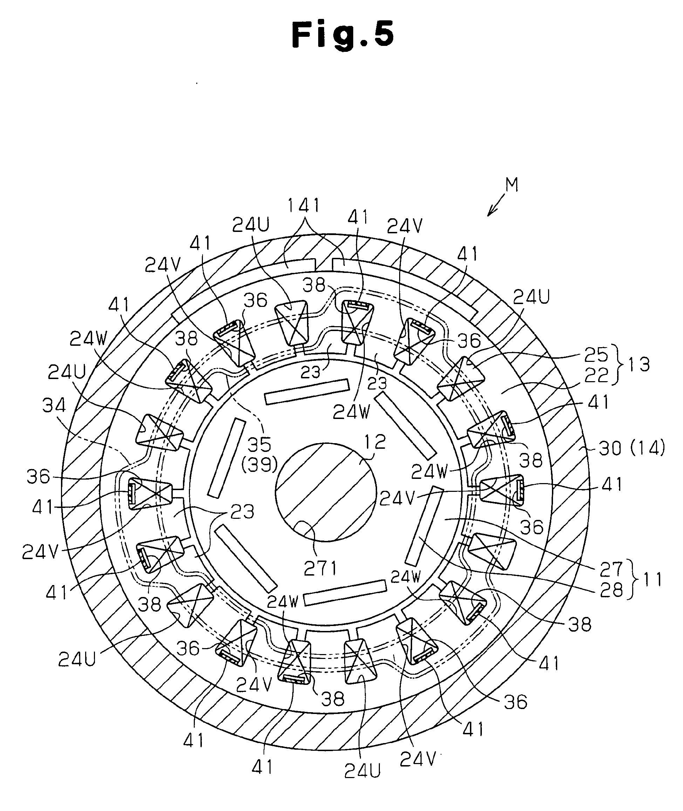

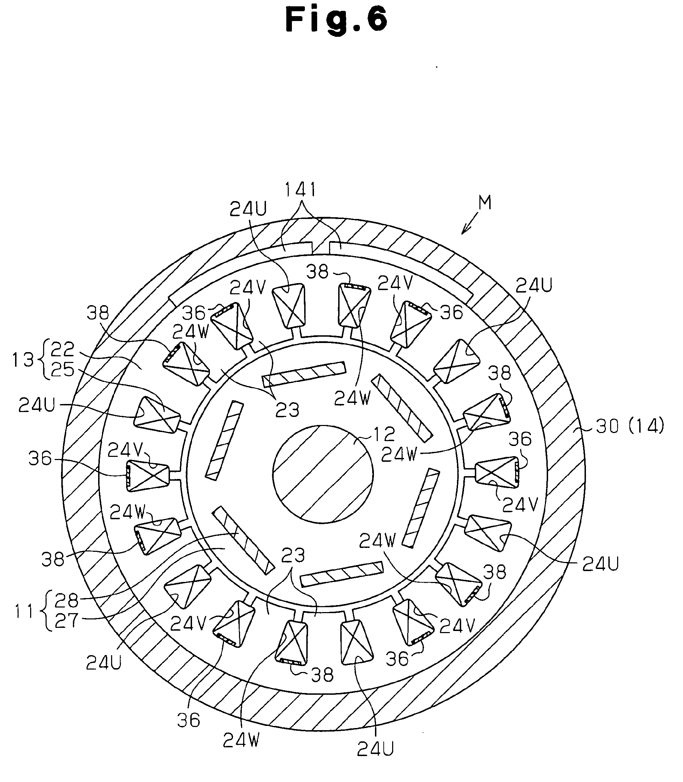

An electric compressor 10 according to a first embodiment of the present invention will now be described with reference to Figs. 1A to 9B. In the description of this specification, the front side and the rear side correspond to the left side and the right side, respectively, in Fig. 1A.

The electric compressor 10 shown in Fig. 1A is a scroll electric compressor. A rotating electric machine M of the electric compressor 10 includes a rotor 11, a rotary shaft 12, a stator 13, a motor housing 14, a compression operation body, which is a movable scroll 15 in this embodiment, and a fixed scroll 16. The rotor 11 is fixed to the rotary shaft 12, and the stator 13 is securely fitted to the inner circumferential surface of the motor housing 14. The movable scroll 15 orbits about the axis of the rotary shaft 12 as the rotary shaft 12 is rotated. When the movable scroll 15 orbits, compression chambers 17 between the movable scroll 15 and the fixed scroll 16 move in the direction of rotation while reducing their volumes.

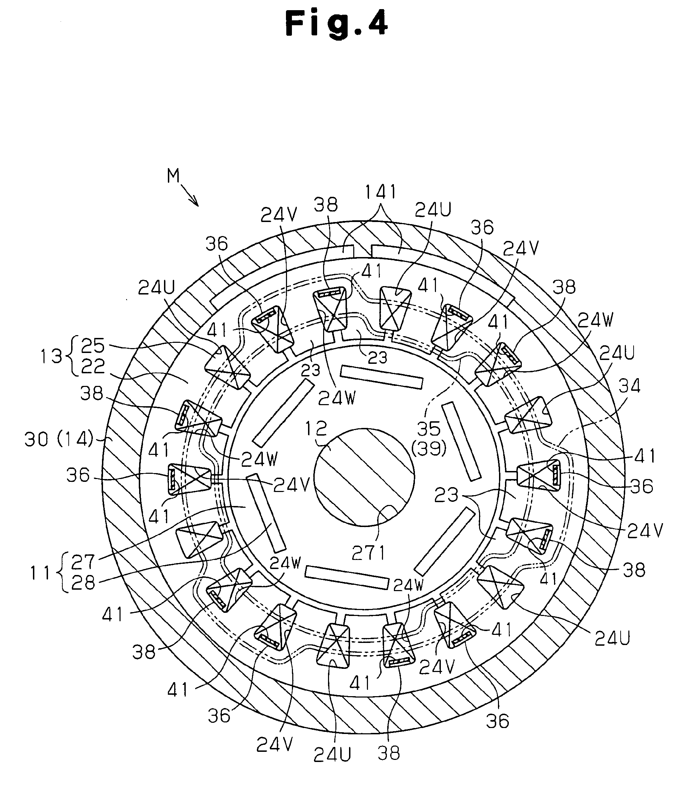

An introduction port 31 is provided in a circumferential wall 30 of the motor housing 14. The introduction port 31 is connected to an external refrigerant circuit, which is not shown, and refrigerant gas is introduced into the motor housing 14 from the external refrigerant circuit via the introduction port 31. The refrigerant gas introduced to the motor housing 14 is drawn into the compression chambers 17 via a passage 141 (shown in Figs. 4, 5, and 6), which is provided between the inner circumferential surface of the motor housing 14 and the outer circumferential surface of the stator 13, and a suction port 18 by orbiting motion of the movable scroll 15 (suction operation). The refrigerant in the compression chambers 17 is compressed by orbiting motion of the movable scroll 15 (discharge operation), and is discharged into a discharge chamber 21 through a discharge port 19 while flexing a discharge valve flap 20. The refrigerant gas in the discharge chamber 21 flows out to the external refrigerant circuit, and returns to the motor housing 14.

As shown in Figs. 4 to 6, the stator 13 includes an annular stator core 22, teeth 23, which are arranged along the inner circumference of the stator core 22, and slots 24U, 24V, 24W, which are formed between adjacent teeth 23, and coils 25, which pass through the slots 24U, 24V, 24W. In the preferred embodiment, the number of the teeth 23 and the number of the slots 24U, 24V, 24W are each eighteen. The slots 24U, 24V, 24W are arranged at equal pitches along the circumferential direction of the annular stator 13.

As shown in Fig. 1A, the stator core 22 is configured by laminating several core plates 26 made of magnetic material (steel plates). The rotor 11 includes a rotor core 27 and a plurality of permanent magnets 28 embedded in the rotor core 27. The rotor core 27 is configured by laminating several core plates 29 made of magnetic material (steel plates). A shaft hole 271 is formed at the central portion of the rotor core 27 to extend through the rotor core 27 in the axial direction, and the rotary shaft 12 extends through and is fixed to the shaft hole 271. The rotary shaft 12 is secured to the rotor core 27.

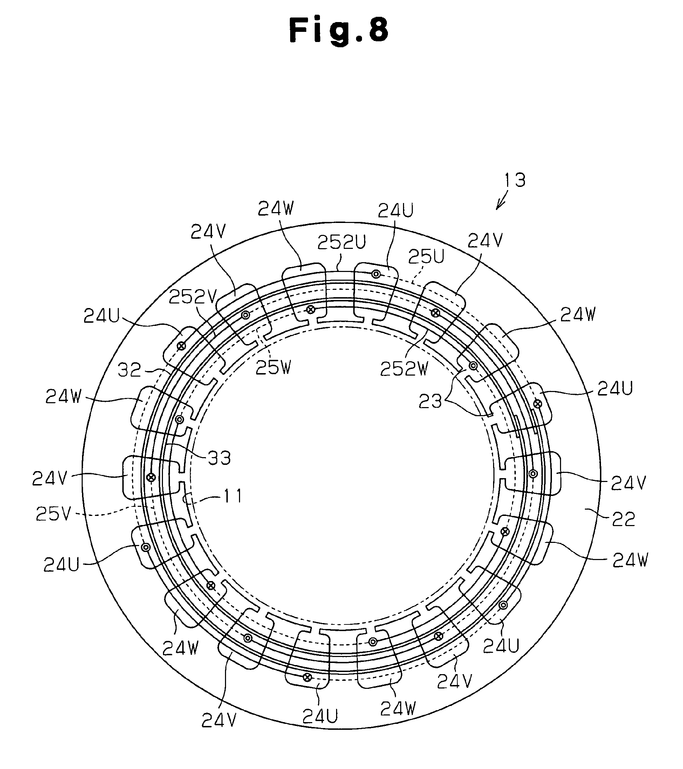

Fig. 8 is a schematic diagram illustrating the stator 13 as viewed from the front side. The coils 25 are provided on the teeth 23 by wave winding. The coils 25 in the slots 24U, 24V, 24W are separated from the inner wall of the slots 24U, 24V, 24W by insulating sheets (not shown), which are arranged between the coils 25 and the inner wall of the slots 24U, 24V, 24W.

A U-phase coil (shown by reference numeral 25U) passes through a first group of slots (shown by reference numeral 24U). A V-phase coil (shown by reference numeral 25V) passes through a second group of slots (shown by reference numeral 24V), and a W-phase coil (shown by reference numeral 25W) passes through a third group of slots (shown by reference numeral 24W). In Fig. 8, sections of each phase coil 25U, 25V, 25W shown by solid lines exist on the front end surface of the stator core 22. That is, the U-phase coil 25U includes second coil ends 252U, which are sections that pass through the slots 24U and protrude forward from the front end surface of the stator core 22. The V-phase coil 25V includes second coil ends 252V, which are sections that pass through the slots 24V and protrude forward from the front end surface of the stator core 22. The W-phase coil 25W includes second coil ends 252W, which are sections that pass through the slots 24W and protrude forward from the front end surface of the stator core 22. Sections of each phase coil 25U, 25V, 25W shown by broken lines exist on the rear end surface of the stator core 22. In each of the phase coils 25U, 25V, 25W, sections between the sections shown by the solid lines and the sections shown by the broken lines pass through the associated slots 24U, 24V, 24W.

A first insulating portion 32 is arranged between the second coil ends 252U of the U-phase coil 25U and the second coil ends 252V of the V-phase coil 25V. The first insulating portion 32 is arranged to wrap around the rotor 11 once. A first insulating portion 33 is arranged between the second coil ends 252V of the V-phase coil 25V and the second coil ends 252W of the W-phase coil 25W, which protrudes from the slot 24W. The first insulating portion 33 is arranged to wrap around the rotor 11 once. The first insulating portions 32 and 33 are both made of a synthetic resin, and are formed into a strip shape. The ends of the strip-shaped first insulating portion 32 are heat welded to each other and the ends of the strip-shaped first insulating portion 33 are also heat welded to each other.

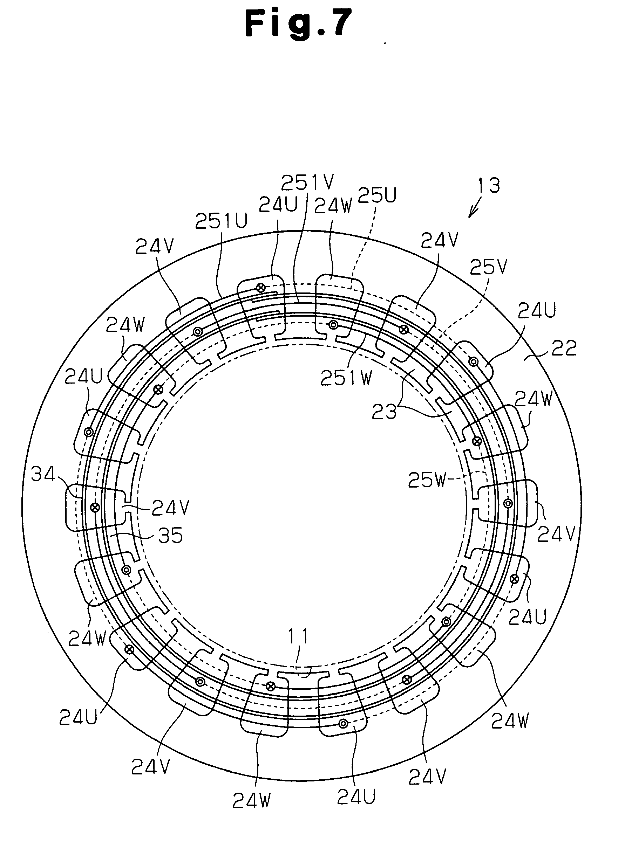

Fig. 7 is a schematic diagram illustrating the stator 13 as viewed from the rear side. Sections of the phase coils 25U, 25V, 25W shown by solid lines in Fig. 7 exist on the rear end surface of the stator core 22 of the stator 13. Sections of the phase coils 25U, 25V, 25W shown by broken lines in Fig. 7 exist on the front end surface of the stator core 22 of the stator 13. That is, the U-phase coil 25U includes first coil ends 251U, which are sections that pass through the slots 24U and protrude rearward from the rear end surface of the stator core 22. The V-phase coil 25V includes first coil ends 251V, which are sections that pass through the slots 24V and protrude rearward from the rear end surface of the stator core 22. The W-phase coil 25W includes first coil ends 251W, which are sections that pass through the slots 24W and protrude rearward from the rear end surface of the stator core 22.

As shown in Fig. 7, a second insulating portion 34 is arranged between the first coil ends 251U of the U-phase coil 25U and the first coil ends 251V of the V-phase coil 25V. The second insulating portion 34 is arranged to wrap around the rotor 11 once. A second insulating portion 35 is arranged between the first coil ends 251V of the V-phase coil 25V and the first coil ends 251W of the W-phase coil 25W. The second insulating portion 35 is arranged to wrap around the rotor 11 once. The second insulating portion 34 is arranged radially outward of the second insulating portion 35. As a result, the second insulating portion 35 is surrounded by the second insulating portion 34. The second insulating portion 34 and the second insulating portion 35 are both made of a synthetic resin, and are formed into a strip shape. The ends of the strip-shaped second insulating portion 34 are heat welded to each other and the ends of the strip-shaped second insulating portion 35 are also heat welded to each other.

As shown in Fig. 1B, the first insulating portion 32 and the second insulating portion 34 are connected by bridge pieces 36 (six in this embodiment). As shown in Figs. 4 to 6, the bridge pieces 36 are inserted in the slots 24V in which the V-phase coil 25V is inserted. The first insulating portion 32, the second insulating portion 34, and the bridge pieces 36 configure an interphase insulating sheet 37, which insulates the coil ends of the V-phase coil 25V from the coil ends of the U-phase coil 25U. In the present embodiment, the first end portion 361 of the bridge piece 36 is located on an outer surface 320 of the annular first insulating portion 32, and the second end portion 362 of the bridge piece 36 is located on an inner surface of the annular second insulating portion 34. The outer surface 320 of the first insulating portion 32 refers to an outer circumferential surface of the annular first insulating portion 32, and the inner surface 340 of the second insulating portion 34 refers to an inner circumferential surface of the annular second insulating portion 34.

The first insulating portion 33 and the second insulating portion 35 are coupled by bridge pieces 38 (six in this embodiment as shown in Figs. 4 to 6). As shown in Figs. 4 to 6, the bridge pieces 38 are inserted in the slots 24W in which the W-phase coil 25W is inserted. The first insulating portion 33, the second insulating portion 35, and the bridge pieces 38 configure an interphase insulating sheet 39, which insulates the coil ends of the V-phase coil 25V from the coil ends of the W-phase coil 25W.

Since the configuration of the interphase insulating sheet 39 and that of the interphase insulating sheet 37 are the same, only the interphase insulating sheet 37 will be discussed below.

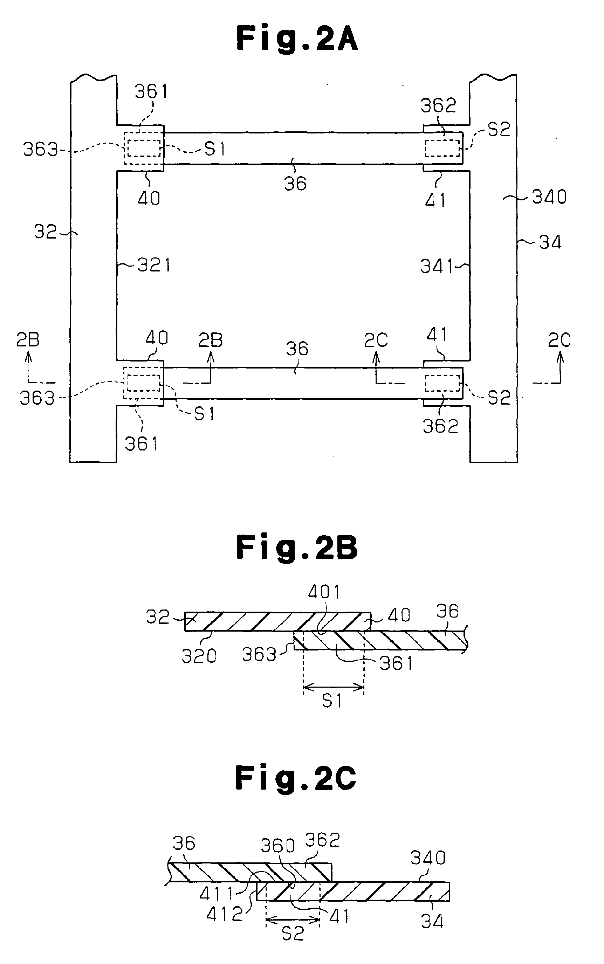

Fig. 2A shows a state where the interphase insulating sheet 37 is developed into a flat state. Fig. 2B shows a cross-sectional view taken along line 2B-2B in Fig. 2A. Fig. 2C shows a cross-sectional view taken along line 2C-2C in Fig. 2A. First coupling aids 40 extend toward the second insulating portion 34 from a first opposing end 321 of the first insulating portion 32 facing the second insulating portion 34. The first coupling aids 40 are integrally formed with the first insulating portion 32. In this embodiment, the number of the first coupling aids 40 is six. Second coupling aids 41 extend toward the first insulating portion 32 from a second opposing end 341 of the second insulating portion 34 facing the first insulating portion 32. The second coupling aids 41 are integrally formed with the second insulating portion 34. In this embodiment, the number of the second coupling aids 41 is six.

As shown in Fig. 2B, a first end portion 361 of each bridge piece 36 closely contacts and is heat welded to an outer surface 401 of the associated first coupling aid 40, which is part of the first insulating portion 32, that is, part of the outer surface 320 of the first insulating portion 32.

As shown in Fig. 2C, a second end portion 362 of each bridge piece 36 closely contacts and is heat welded to an inner surface 411 of the associated second coupling aid 41, which is part of the second insulating portion 34, that is, part of the inner surface 340 of the second insulating portion 34.

As shown in Figs. 2A to 2C, symbol S1 indicates a heat-welding zone at the contact portion between the first end portion 361 of each bridge piece 36 and the associated first coupling aid 40, symbol S2 indicates a heat-welding zone at the contact portion between the second end portion 362 of each bridge piece 36 and the associated second coupling aid 41.

Most part of the first coupling aids 40 and the second coupling aids 41 of the interphase insulating sheet 37 is arranged in the V-phase slots 24V. Most part of the first coupling aids 40 and the second coupling aids 41 of the interphase insulating sheet 39 is arranged in the W-phase slots 24W.

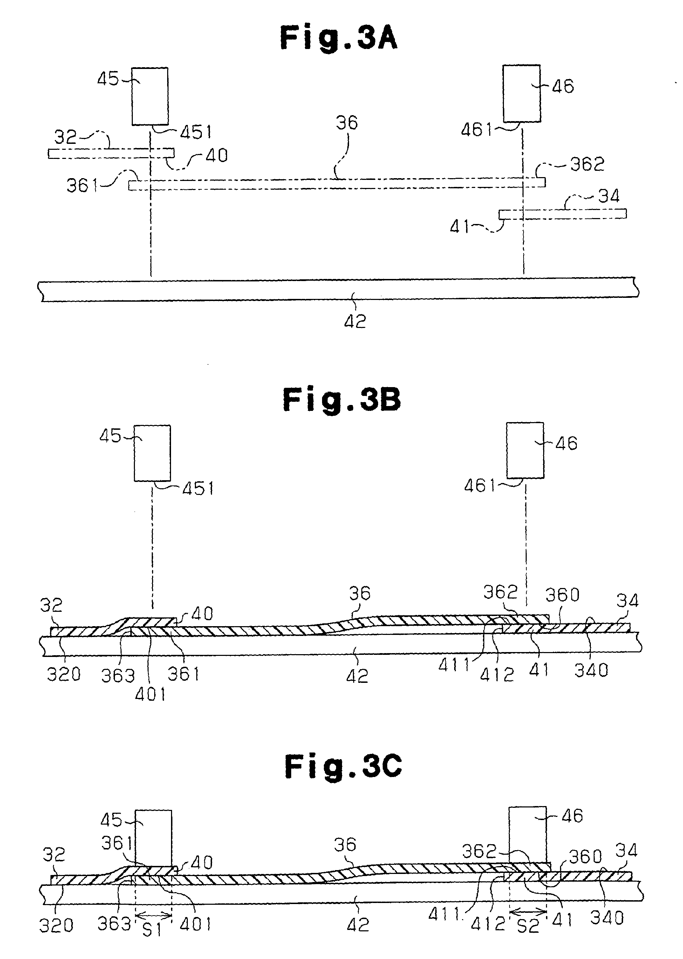

Fig. 3A shows an apparatus, which heat welds each bridge piece 36 to the associated first coupling aid 40 of the first insulating portion 32 and the associated second coupling aid 41 of the second insulating portion 34. The apparatus includes a ferrous ultrasonic welding base 42. The upper surface of the ultrasonic welding base 42 is a flat surface.

Also, the ultrasonic welding apparatus includes a first ultrasonic horn 45 and a second ultrasonic horn 46. The first ultrasonic horn 45 and the second ultrasonic horn 46 integrally move up and down. A lower surface 451 of the first ultrasonic horn 45 and a lower surface 461 of the second ultrasonic horn 46 are flat surfaces that are parallel to the upper surface of the ultrasonic welding base 42.

Figs. 3B and 3C show a method for coupling each bridge piece 36 to the associated first coupling aid 40 of the first insulating portion 32 and the associated second coupling aid 41 of the second insulating portion 34. As shown in Fig. 3B, the second insulating portion 34 is mounted on the ultrasonic welding base 42. Next, the second end portion 362 of the bridge piece 36 is mounted on the second coupling aid 41. Then, the first insulating portion 33 is mounted on the ultrasonic welding base 42, such that the first coupling aid 40 is placed on the first end portion 361 of the bridge piece 36.

Subsequently, as shown in Fig. 3C, the first ultrasonic horn 45 and the second ultrasonic horn 46 are lowered such that the first ultrasonic horn 45 is pressed against the first coupling aid 40 and the second ultrasonic horn 46 is pressed against the second end portion 362 of the bridge piece 36. The first end portion 361 of the bridge piece 36 and the first coupling aid 40 closely contact each other by being sandwiched between the upper surface of the ultrasonic welding base 42 and the lower surface 451 of the first ultrasonic horn 45, and the second end portion 362 of the bridge piece 36 and the second coupling aid 41 closely contact each other by being sandwiched between the upper surface of the ultrasonic welding base 42 and the lower surface 461 of the second ultrasonic horn 46.

Then, the ultrasonic welding apparatus is operated so that, in the zone where the first end portion 361 contacts the first coupling aid 40, the zone S1 corresponding to the lower surface of the first ultrasonic horn 45 is ultrasonic welded (heat welded). In the zone where the second end portion 362 contacts the second coupling aid 41, the zone S2 corresponding to the lower surface of the second ultrasonic horn 46 is ultrasonic welded (heat welded).

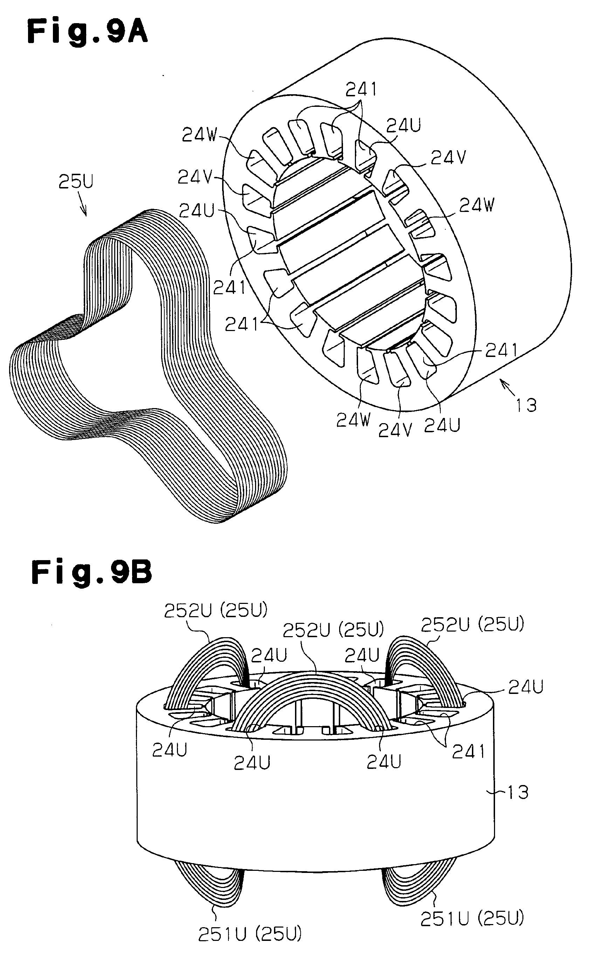

Next, the coils 25 are inserted in the slots 24U, 24V, and 24W using an inserter, which is not shown. Figs. 9A and 9B show the state where the U-phase coil 25U is inserted in the slots 24U using the inserter. The stator core 22 has a first end face and a second end face, which face in opposite directions in the axial direction of the stator core 22. Each of the slots 24U, 24V, and 24W has a first open end, which opens in the first end face of the stator core 22, and a second open end, which opens in the second end face of the stator core 22. As shown in Fig. 9A, the first open ends of the slots 24U, 24V, and 24W correspond to insertion ends 241 in which the coils 25 are inserted. As shown in Fig. 9A, the U-phase coil 25U is inserted in the slots 24U from the first open ends of the slots 24U, that is, the insertion ends 241 toward the second open ends. Fig. 9B shows the state where the U-phase coil 25U is inserted in the slots 24U.

After the U-phase coil 25U is inserted in the slots 24U, the bridge pieces 36 of the interphase insulating sheet 37 are inserted in the slots 24V to be radially inward of the V-phase coil 25V. Then, the V-phase coil 25V is inserted in the slots 24V from the insertion ends 241 using the inserter. After the V-phase coil 25V is inserted in the slots 24V, the bridge pieces 38 of the interphase insulating sheet 39 are inserted in the slots 24W to be radially inward of the W-phase coil 25W. Then, the W-phase coil 25W is inserted in the slots 24W from the insertion ends 241 using the inserter.

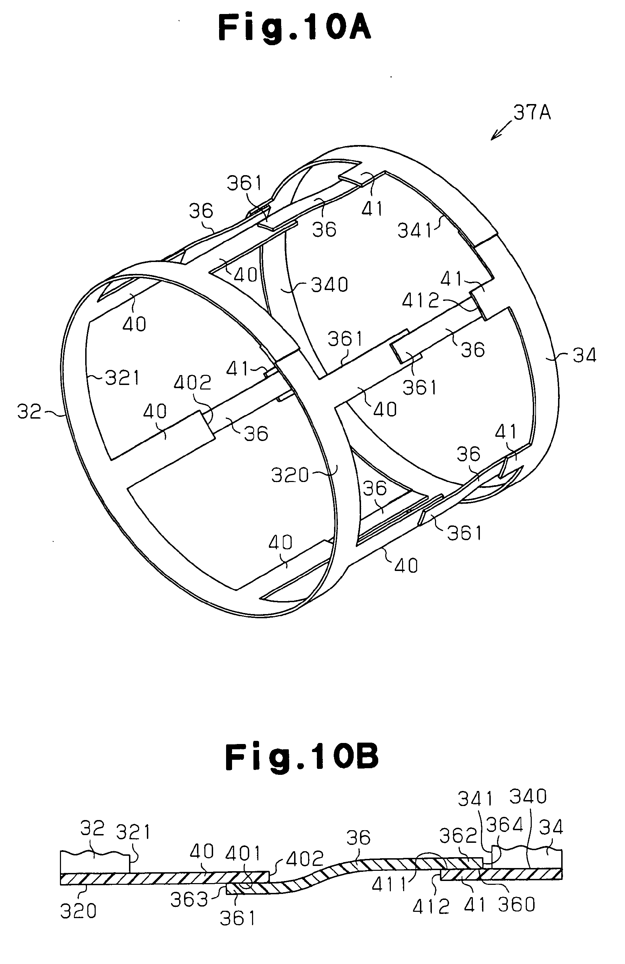

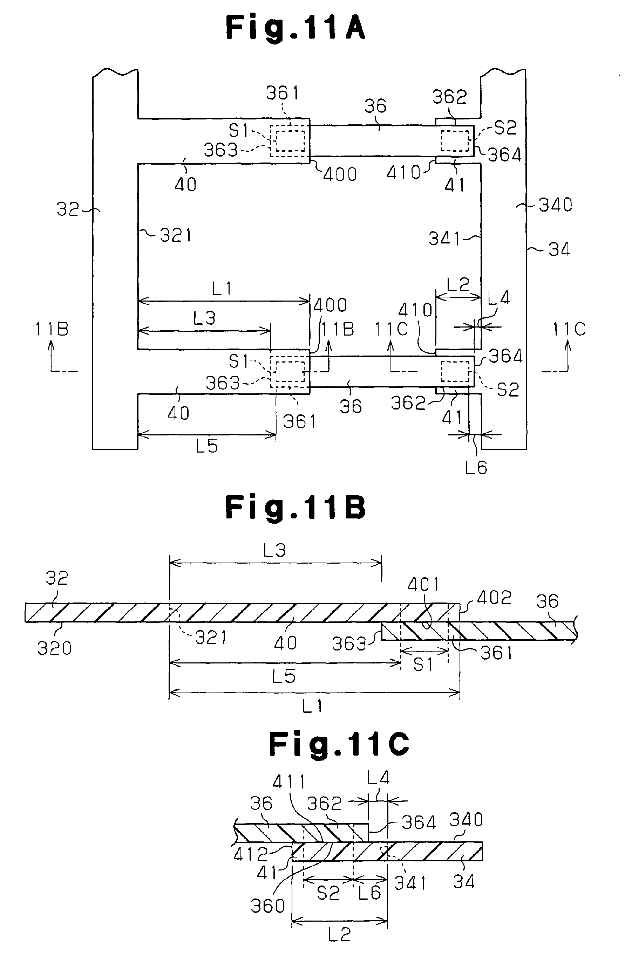

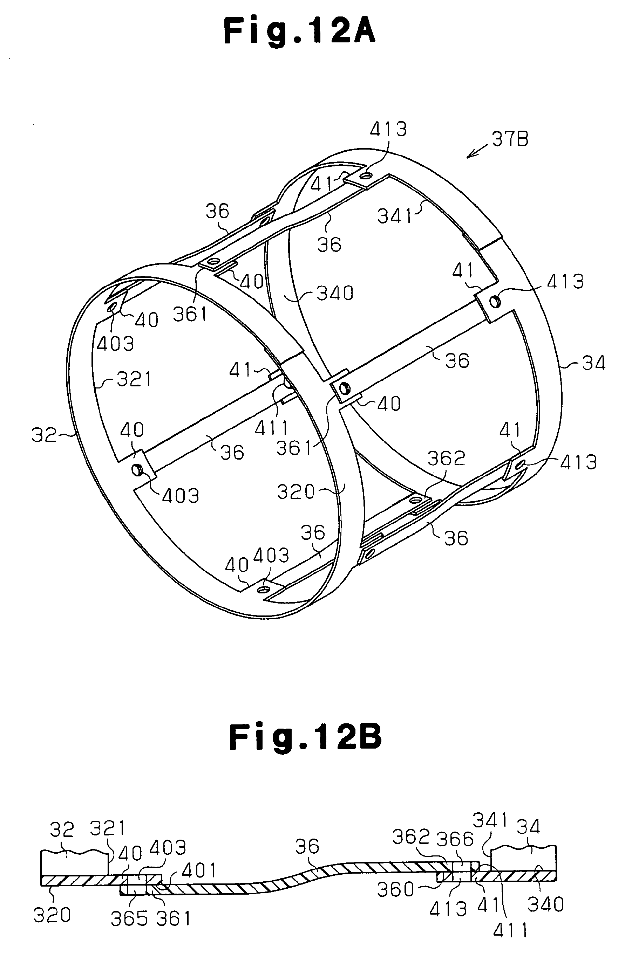

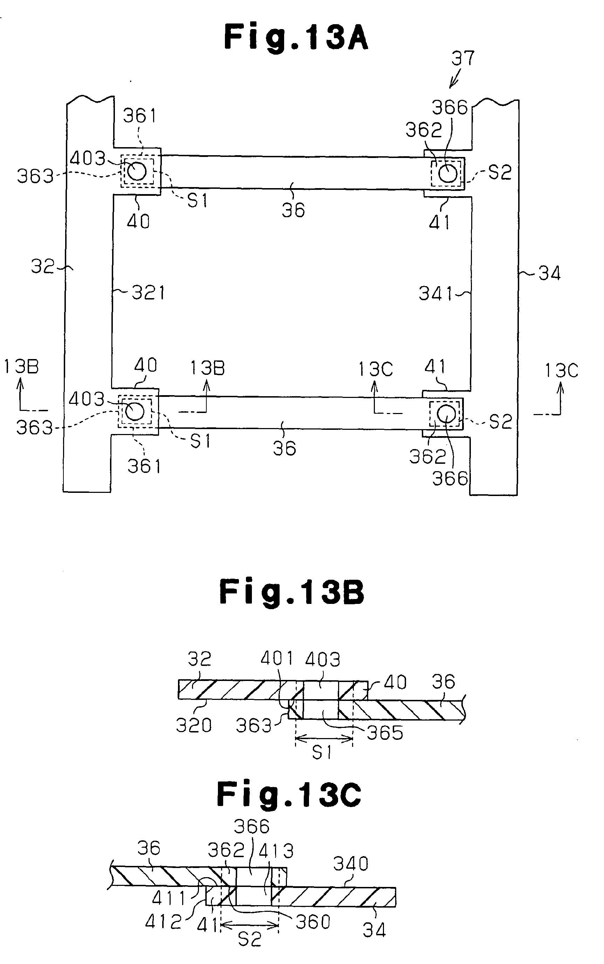

The present embodiment has the following advantages.
(1) When inserting the V-phase coil 25V in the slots 24V, the V-phase coil 25V abrades the first coupling aids 40 of the interphase insulating sheet 37. Since the edges 363 of the first end portions 361 located in the vicinity of the insertion ends 241 of the slots 24V are located on the outer surfaces 401 of the first coupling aids 40, the V-phase coil 25V does not get caught by the edges 363 of the bridge pieces 36 when inserting the V-phase coil 25V in the slots 24V.
   When inserting the V-phase coil 25V in the slots 24V, the V-phase coil 25V abrades the second end portions 362 of the bridge pieces 36. Since the edges 412 of the second coupling aids 41 located in the vicinity of the second end face of the stator core 22 are located on the outer surfaces 360 of the second end portions 362 of the bridge pieces 36, the V-phase coil 25V does not get caught by the edges 412 of the second coupling aids 41 when inserting the V-phase coil 25V in the slots 24V.
   As a result, the insulating coating of the V-phase coil 25V is not damaged.
   Likewise, when inserting the W-phase coil 25W in the slots 24W, the W-phase coil 25W abrades the first coupling aids of the interphase insulating sheet 39. Since the edges of the first end portions of the bridge pieces 38 located in the vicinity of the insertion ends 241 of the slots 24W are located on the outer surfaces of the first coupling aids, the W-phase coil 25W does not get caught by the edges of the bridge pieces 38 when inserting the W-phase coil 25W in the slots 24W.
   When inserting the W-phase coil 25W in the slots 24W, the W-phase coil 25W abrades the second end portions of the bridge pieces 38, the W-phase coil 25W does not get caught by the second end portions of the bridge pieces 38. Also, since the edges of the second coupling aids located in the vicinity of the second end face of the stator core 22 are located on the outer surfaces of the second end portions of the bridge pieces 38, the W-phase coil 25W does not get caught by the edges of the second coupling aids when inserting the W-phase coil 25W in the slots 24W.
   As a result, the insulating coating of the W-phase coil 25W is not damaged.
(2) The rotating electric machine M with wave winding that has low pulsation (low vibration) is suitable to be applied to the electric compressor 10. That is, in the electric compressor 10, there is a demand for reducing size in addition to reducing noise and vibration. The rotating electric machine M with wave winding according to the preferred embodiment is suitable for such demand. The electric compressor 10 using the rotating electric machine M with wave winding is particularly suitable for vehicle electric compressors that have particularly severe demands.
   A second embodiment of the present invention will now be described with reference to Figs. 10A to 11C. In the second embodiment described below, like or the same reference numerals are given to those components that are like or the same as the corresponding components of the first embodiment, which has already been described, and explanations are omitted or simplified.
   As shown in Fig. 11A, the length of each first coupling aid 40, that is, the length L1 from the first opposing end 321 to edge 402 of the first coupling aid 40, is longer than the length of each second coupling aid 41, that is, the length L2 from the second opposing end 341 to edge 412 of the second coupling aid 41. In other words, the extending length of the first coupling aid 40 is longer than the extending length of the second coupling aid 41. Therefore, the length L3 from the first opposing end 321 to the edge 363 of the first end portion 361 of the bridge piece 36 is longer than the length L4 from the second opposing end 341 to the edge 364 of the second end portion 362 of the bridge piece 36. In other words, the distance between a heat-welding position in each first coupling aid 40 with the bridge piece 36, or the heat-welding zone S1, and the first opposing end 321, is longer than the distance between a heat-welding position in each second coupling aid 41, or the heat-welding zone S2, and the second opposing end 341.
   As shown in Figs. 11A to 11C, the distance L5 from the heat-welding zone S1 in the contact portion between the first end portion 361 of the bridge piece 36 and the first coupling aid 40 to the first opposing end 321 is longer than the length L3. The distance L6 from the heat-welding zone S2 in the contact portion between the second end portion 362 of the bridge piece 36 and the second coupling aid 41 to the second opposing end 341 is longer than the length L4, but shorter than the distance L5.
   In addition to the advantages of the first embodiment, the second embodiment has the following advantages.
(3) When inserting the V-phase coil 25V in the slots 24V, the V-phase coil 25V abrades the first end portions 361 of the bridge pieces 36 of the interphase insulating sheet 37A. If the contact portion between the first end portion 361 and the first coupling aid 40, or an overlapping portion of two sheets, is located in the vicinity of the insertion end 241 of the slot 24, insertion resistance at the time of inserting the V-phase coil 25V into the slots 24V is increased.
   In the present embodiment, the distance L3 between the edge 363 of the first end portion 361 located close to the insertion end 241 of each slot 24V and the first opposing end 321 is longer than the distance L4 between the edge 364 of the second end portion 362 located close to the second opening end of each slot 24V and the second opposing end 341. Since the contact portion between the first end portion 361 of each bridge piece 36 and the first coupling aid 40 is spaced away from the first insulating portion 32, the insertion resistance at the time of inserting the V-phase coil 25V in the slots 24V is reduced.
   As a result, the insulating coating of the coil 25 is prevented from being damaged.
(4) The thickness of the contact portion between the first end portion 361 of each bridge piece 36 and the first coupling aid 40 is greater than the thickness of the remainder of the bridge piece 36 and the first coupling aid 40. Such sections with a great thickness increase the insertion resistance when inserting a coil in slots.
   However, in the present embodiment, since the heat-welding zone S1 is spaced away from the first insulating portion 32, the insertion resistance when inserting a coil in slots into which bridge pieces of an interphase insulating sheet is reduced.
   A third embodiment of the present invention will now be described with reference to Figs. 12A to 14C. In the second embodiment described below, like or the same reference numerals are given to those components that are like or the same as the corresponding components of the first embodiment, which has already been described, and explanations are omitted or simplified.
   As shown in Fig. 13B, a circular first positioning hole 403 is formed through each first coupling aid 40, a circular third positioning hole 365 is formed through the first end portion 361 of each bridge piece 36. The first positioning hole 403 and the third positioning hole 365 have the same diameter and are aligned with each other.
   As shown in Fig. 13C, a circular second positioning hole 413 is formed through each second coupling aid 41, a circular fourth positioning hole 366 is formed through the second end portion 362 of each bridge piece 36. The second positioning hole 413 and the fourth positioning hole 366 have the same diameter and are aligned with each other.
   As shown in Fig. 13A, the first positioning hole 403 and the third positioning hole 365 are within the range of a heat-welding zone S1 at the contact portion between the first end portion 361 of each bridge piece 36 and the associated first coupling aid 40. The second positioning hole 413 and the fourth positioning hole 366 are within the range of a heat-welding zone S2 at the contact portion between the second end portion 362 of each bridge piece 36 and the associated second coupling aid 41.

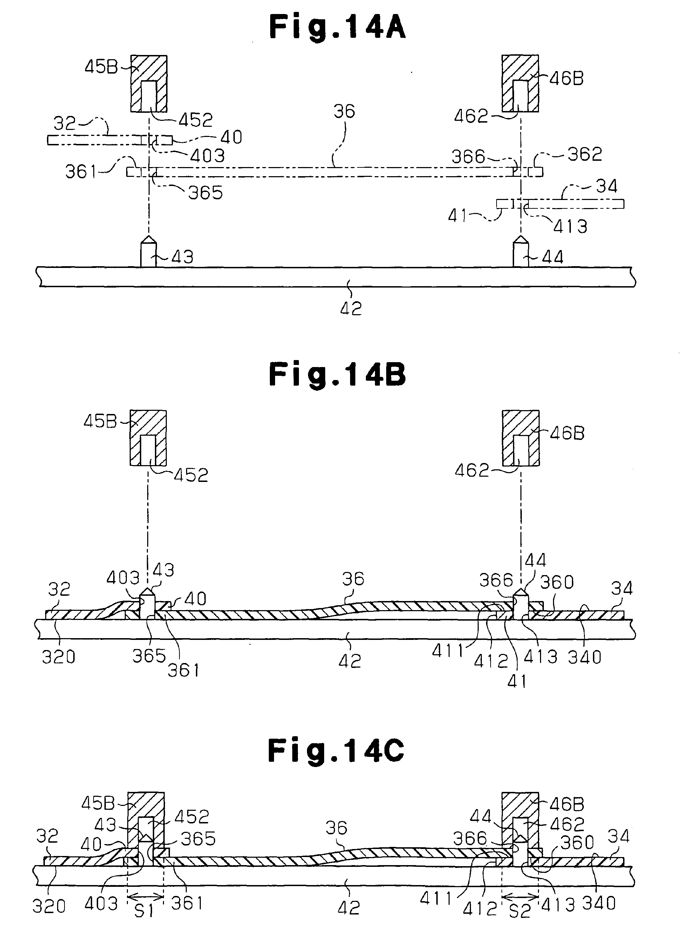

   Fig. 14A shows an ultrasonic welding apparatus, which heat welds each bridge piece 36 to the associated first coupling aid 40 of the first insulating portion 32 and the associated second coupling aid 41 of the second insulating portion 34 using ultrasonic wave. A first positioning pin 43 and a second positioning pin 44 are fixed on the upper surface of the ultrasonic welding base 42 to extend upward. The first positioning pin 43 is a circular pin the diameter of which is slightly smaller than the diameter of the first positioning hole 403 and the third positioning hole 365. The second positioning pin 44 is a circular pin the diameter of which is slightly smaller than the diameter of the second positioning hole 413 and the fourth positioning hole 366.
   A first introduction recess 452 is formed in the lower surface of a first ultrasonic horn 45B, and a second introduction recess 462 is formed in the lower surface of a second ultrasonic horn 46B. The first introduction recess 452 has the same diameter as the first positioning hole 403 and the third positioning hole 365, and the first positioning pin 43 is selectively inserted in the first introduction recess 452. The second introduction recess 462 has the same diameter as the second positioning hole 413 and the fourth positioning hole 366, and the second positioning pin 44 is selectively inserted in the second introduction recess 462.
   Figs. 14B and 14C show a method for coupling each bridge piece 36 to the associated first coupling aid 40 of the first insulating portion 32 and the associated second coupling aid 41 of the second insulating portion 34. As shown in Fig. 14B, the second insulating portion 34 is placed on the ultrasonic welding base 42 such that the second positioning pin 44 passes through the second positioning hole 413. Then, the bridge piece 36 is placed on the ultrasonic welding base 42 such that the second positioning pin 44 passes through the fourth positioning hole 366 and the first positioning pin 43 passes through the third positioning hole 365. Next, the first insulating portion 32 is placed on the ultrasonic welding base 42 such that the first positioning pin 43 passes through the first positioning hole 403.
   Subsequently, the first ultrasonic horn 45B is moved downward and pressed against the first coupling aid 40 such that the first positioning pin 43 is inserted in the first introduction recess 452 as shown in Fig. 14C. Also, the second ultrasonic horn 46B is moved downward. As shown in Fig. 14C, the second ultrasonic horn 46B is pressed against the second end portion 362 of the bridge piece 36 such that the second positioning pin 44 is inserted in the second introduction recess 462. The first end portion 361 of the bridge piece 36 and the first coupling aid 40 closely contact each other by being sandwiched between the upper surface of the ultrasonic welding base 42 and the lower surface of the first ultrasonic horn 45B, and the second end portion 362 of the bridge piece 36 and the second coupling aid 41 closely contact each other by being sandwiched between the upper surface of the ultrasonic welding base 42 and the lower surface of the second ultrasonic horn 46B.
   Then, the ultrasonic welding apparatus is operated so that, in the zone where the first end portion 361 contacts the first coupling aid 40, the zone S1 corresponding to the lower surface of the first ultrasonic horn 45 is ultrasonic welded (heat welded). Also, in the zone where the second end portion 362 contacts the second coupling aid 41, the zone S2 corresponding to the lower surface of the second ultrasonic horn 46 is ultrasonic welded (heat welded).
   In addition to the advantages of the first embodiment, the third embodiment has the following advantages.
(5) The first insulating portion 32 and the second insulation portion 34 are spaced from each other by a predetermined distance that corresponds to the length of the stator 13 along the axial direction of the rotary shaft 12.
   In the present embodiment, the ultrasonic welding is performed in a state where the first positioning pin 43 is inserted in the first positioning hole 403 and the third positioning hole 365, and the second positioning pin 44 is inserted in the second positioning hole 413 and the fourth positioning hole 366. Thus, during ultrasonic welding, positional displacement is suppressed from occurring between the first coupling aid 40 and the bridge piece 36, and between the second coupling aid 41 and the bridge piece 36. As a result, the interphase insulating sheet 37 is easily manufactured, which includes the first insulating portion 32 and the second insulating portion 34, which are separate from each other by a predetermined distance.
(6) During ultrasonic welding, the bridge piece 36 easily moves with respect to the first insulating portion 32 and the second insulating portion 34 by ultrasonic vibration. However, in the preferred embodiment, since the first positioning pin 43 is inserted in the first positioning hole 403 and the third positioning hole 365, and the second positioning pin 44 is inserted in the second positioning hole 413 and the fourth positioning hole 366, the bridge piece 36 is suppressed from moving with respect to the first insulating portion 32 and the second insulating portion 34 by the ultrasonic vibration.
(7) The first positioning pin 43 and the second positioning pin 44 are provided on the upper surface of the ultrasonic welding base 42 to extend upward. Therefore, by inserting the first positioning pin 43 in the first positioning hole 403 and the third positioning hole 365, and the second positioning pin 44 in the second positioning hole 413 and the fourth positioning hole 366, the first insulating portion 32, the second insulating portion 34, and the bridge piece 36 are suppressed from being displaced on the ultrasonic welding base 42. The upper surface of the ultrasonic welding base 42 on which the first insulating portion 32, the second insulating portion 34, and the bridge piece 36 are mounted is suitable for providing the first positioning pin 43 and the second positioning pin 44.
(8) The first positioning pin 43 is introduced into the first introduction recess 452, and the second positioning pin 44 is introduced into the second introduction recess 462. Thus, the first coupling aid 40 and the first end portion 361 of the bridge piece 36 closely contact each other by being securely sandwiched between the upper surface of the ultrasonic welding base 42 and the lower surface of the first ultrasonic horn 45B, and the second coupling aid 41 and the second end portion 362 of the bridge piece 36 closely contact each other by being securely sandwiched between the upper surface of the ultrasonic welding base 42 and the lower surface of the second ultrasonic horn 46B. As a result, the first coupling aid 40 and the first end portion 361 of the bridge piece 36 are reliably ultrasonic welded, and the second coupling aid 41 and the second end portion 362 of the bridge piece 36 are reliably ultrasonic welded.
(9) If the first positioning holes 403 exist at part of the first insulating portion 32 other than the first coupling aids 40, the first positioning holes 403 are arranged between the first coil ends 251U, 251V. Thus, electrical insulation between the first coil ends 251U and the first coil ends 251V is not reliably ensured. Likewise, if the second positioning holes 413 exist at part of the second insulating portion 34 other than the second coupling aids 41, the second positioning holes 413 are arranged between the second coil ends 252U and the second coil ends 252V. Thus, electrical insulation between the second coil ends 252U and the second coil ends 252V is not reliably ensured.

However, as in the preferred embodiment, the configuration in which the first positioning holes 403 are provided in the first coupling aids 40, which are inserted in the slots 24V, and the second positioning holes 413 are provided in the second coupling aids 41, which are inserted in the slots 24V, electrical insulation between the second coil ends 252U and the second coil ends 252V is reliably ensured.

The present invention may be modified as follows.

The coupling aids of the insulating portions and the bridge pieces may be heat welded by heat-welding means other than ultrasonic welding.

The present invention may be applied to electric compressors other than scroll compressors (for example, piston compressors). Pistons are compression operation bodies.

## Claims

1. An interphase insulating sheet (37, 37A, 37B, 39) of a rotating electric machine (M), the rotating electric machine (M) being provided with a stator (13) including an annular stator core (22), the stator core (22) including first and second end faces facing opposite directions in the axial direction of the stator core (22), the stator core (22) including a plurality of teeth (23) arranged along an inner circumference of the stator core (22) in the circumferential direction, slots (24U, 24V, 24W) being formed between adjacent teeth (23), each slot (24U, 24V, 24W) having an insertion end (241) that opens at the first end face, wherein coils (25) of a plurality of phases are inserted in the slots (24U, 24V, 24W) from the insertion ends (241) and toward the second end face, so that the coils (25) are provided on the teeth (23) in wave winding passing through the slots (24U, 24V, 24W),
wherein the coil (25) of each phase includes a first coil end (251U, 251V, 251W) arranged to protrude outside from the first end face and a second coil end (252U, 252V, 252W) arranged to protrude outside from the second end face,
wherein the interphase insulating sheet (37, 37A, 37B, 39) includes a first insulating portion (32) arranged between the first coil ends (251U, 251V, 251W) of two different phases, a second insulating portion (34) arranged between the second coil ends (252U, 252V, 252W) of two different phases, and at least one bridge piece (36) inserted in one of the slots (24U, 24V, 24W), the bridge piece (36) including a first end portion (361) coupled to the first insulating portion (32) and a second end portion (362) coupled to the second insulating portion (34),
wherein the first insulating portion (32) includes at least one first coupling aid (40) integrally provided with the first insulating portion (32) to extend from a first opposing end that faces the second insulating portion (34) and into the slot (24U, 24V, 24W), and the second insulating portion (34) includes at least one second coupling aid (41) integrally provided with the second insulating portion (34) to extend from a second opposing end that faces the first insulating portion (32) and into the slot (24U, 24V, 24W), and
wherein the first end portion (361) of the bridge piece (36) is heat welded to the first coupling aid (40), and the second end portion (362) of the bridge piece (36) is heat welded to the second coupling aid (41),
the insulating sheet **being characterized in that** the first coupling aid (40) and the second coupling aid (41) each have an outer surface facing radially outward of the stator core (22) and an inner surface facing radially inward of the stator core (22), wherein the first end portion (361) of the bridge piece (36) is located on the outer surface of the first coupling aid (40), and the second end portion (362) of the bridge piece (36) is located on the inner surface of the second coupling aid (41).

2. The interphase insulating sheet according to claim 1, **characterized in that** the distance between an edge of the first end portion (361) of the bridge piece (36) and the first opposing end is greater than the distance between an edge of the second end portion (362) of the bridge piece (36) and the second opposing end.

3. The interphase insulating sheet according to claim 2, **characterized in that** the distance between a heat-welding position of the first coupling aid (40) with the bridge piece (36) and the first opposing end is greater than the distance between a heat-welding position of the second coupling aid (41) with the bridge piece (36).

4. The interphase insulating sheet according to claim 2 or 3, **characterized in that** the extending length of the first coupling aid (40) is greater than the extending length of the second coupling aid (41).

5. The interphase insulating sheet according to any one of claims 1 to 4, **characterized in that** the first coupling aid (40) includes a first positioning hole (403) and the second coupling aid (41) includes a second positioning hole (413), and
wherein the first end portion (361) of the bridge piece (36) includes a third positioning hole (365), which is aligned with the first positioning hole (403), and the second end portion (362) of the bridge piece (36) includes a fourth positioning hole (366), which is aligned with the second positioning hole (413).

6. The interphase insulating sheet according to any one of claims 1 to 5, **characterized in that** the heat welding is ultrasonic welding.

7. An electric compressor, which compresses gas in a compression chamber (17) and discharges the gas by compression operation of a compression operation body based on rotation of a rotary shaft (12), the electric compressor being **characterized in that** the rotary shaft (12) is driven by a rotating electric machine (M) provided with the interphase insulating sheet (37, 37A, 37B, 39) according to any one of claims 1 to 6.
